# EUROPÄISCHE PATENTSCHRIFT

(11) **EP 2 088 848 B1**
(45) Veröffentlichungstag und Bekanntmachung des Hinweises auf die Patenterteilung: **15.09.2010**
(21) Anmeldenummer: 07846840.2
(22) Anmeldetag: 27.11.2007
(51) Int. Cl.: A01D 33/10

(54) **SELBSTFAHRENDE LADE- UND REINIGUNGSVORRICHTUNG FÜR WURZELFRÜCHTE, INSBESONDERE FÜR ZUCKERRÜBEN**
SELF-PROPELLED LOADING AND CLEANING DEVICE FOR ROOT CROPS, ESPECIALLY FOR SUGAR BEET
DISPOSITIF DE CHARGEMENT ET DE NETTOYAGE AUTOMOTEUR DE TUBERCULES, NOTAMMENT POUR BETTERAVES À SUCRE

(30) Priorität: 28.11.2006 DE 102006056436
(43) Veröffentlichungstag der Anmeldung: 19.08.2009
(73) Patentinhaber: Franz Kleine Vertriebs- und Engineering GmbH, 33154 Salzkotten (DE)
(72) Erfinder: BRETTMEISTER, Josef, 86556 Kühbach (DE)
(74) Vertreter: Rehberg Hüppe + Partner
(86) Internationale Anmeldenummer: PCT/EP2007/010277
(87) Internationale Veröffentlichungsnummer: WO 2008/064856

(56) Entgegenhaltungen:
- EP-A- 0 297 622
- EP-A- 0 732 047
- DE-U1-202004 009 609

## Beschreibung

### TECHNISCHES GEBIET DER ERFINDUNG

Die Erfindung bezieht sich auf eine selbstfahrende Lade- und Reinigungsvorrichtung für Wurzelfrüchte, insbesondere für Zuckerrüben, mit den Merkmalen des Oberbegriffs des unabhängigen Patentanspruchs 1.

Soweit im Weiteren dieser Beschreibung nur auf Rüben oder Zuckerrüben eingegangen wird, so stehen diese exemplarisch für weitere Wurzelfrüchte, auch wenn die Erfindung im Zusammenhang mit Zuckerrüben besondere Bedeutung hat.

### STAND DER TECHNIK

Eine selbstfahrende Lade- und Reinigungsvorrichtung mit den Merkmalen des Oberbegriffs des Patentanspruchs 1 ist z. B aus der EP 0 732 047 B2 bekannt. Die Seitentische dieser Vorrichtung grenzen in der Mitte der Vorrichtung, d. h. vor der Förder- und Reinigungsstrecke, direkt aneinander an, wobei ihre Vorderkanten in einer senkrecht zur Fahrtrichtung verlaufenden horizontalen Linie ausgereichtet sind. Jeder der Seitentische weist eine mit Nocken besetzten Aufnahmewalze oder ein mit Fingern besetztes Aufnahmeband, eine die Nocken bzw. Finger kämmende Achtkantwalze und mehreren sich hieran anschließende mit Wendeln versehene Querförderschnecken auf. Wenn mit dieser bekannten Vorrichtung Rüben aus einer Miete aufgenommen werden, wird die Vorrichtung an die Schmalseite der Rübenmiete heran und dann weiter längs der Mittellinie der Rübenmiete vorgefahren. Dabei werden die Rüben an der Mietensole durch die Aufnahmeeinrichtungen aufgenommen und von den Querförderschnecken der Seitentische zu der Förder- und Reinigungsstrecke abtransportiert. Hierdurch fallen Rüben aus der Miete zur Rübensole hin nach. Da die Rüben in der Rübenmiete zu deren Mitte hin konzentriert sind und da der Angriff der Aufnahmeeinrichtungen der Vorrichtung senkrecht zu der Mittellinie der Rübenmiete erfolgt, fallen die Rüben im Wesentlichen längs der Mittellinie der Rübenmiete zur Mietensole hin nach. Damit gelangt ein großer Anteil der Rüben auf relativ kurzem Wege über die Seitentische zu der Förder- und Reinigungsstrecke, und über die äußeren Bereiche der Seitentische laufen nur wenige Rüben hinweg. Entsprechend konzentriert sich die mit der Vorrichtung von den Rüben abgereinigte Erde im Bereich der Längsachse der Vorrichtung, und die Reinigungskapazität der Vorrichtung im Bereich ihrer Seitentische wird nicht ausgeschöpft. Für eine gute Reinigung der Rüben ist es wünschenswert, dass die Rüben möglichst lange Strecken auf den Seitentischen zurücklegen. Wenn dies durch eine gleichmäßigere Belegung der Seitentische mit den Rüben erreicht würde, hätte dies auch zur Folge, dass sich die von den Rüben abgereinigte Erde gleichmäßiger über die Arbeitsbreite der Vorrichtung verteilte. Um dies zu erreichen, ist gemäß der EP 0 732 047 B2 vorgesehen, die Rüben auf den Seitentischen zunächst nach außen zu fördern und erst dann wieder zu der Förder- und Reinigungsstrecke hin zusammenzuziehen. Um diesen Rübenfluss umzusetzen ist zwischen nach außen fördernden vorderen Querförderschnecken und weiter hinten liegenden nach innen fördernden Querförderschnecken jeweils eine konische Übergabewalze angeordnet, die eine sich nach außen verjüngende Barriere ausbildet. Das Auseinanderziehen und Wiederzusammenführen der Rüben auf den Seitentischen, um die Reinigungsleistung der Vorrichtung zu verbessern und die von den Rüben abgereinigte Erde gleichmäßiger über die Arbeitsbreite der Vorrichtung zu verteilen, verlangt eine vergleichsweise große Tiefe der Seitentische in Fahrtrichtung und deren Ausstattung mit vergleichsweise vielen aufeinander folgenden Querförderschnecken. Hierdurch werden die Komplexität und das Gewicht der Seitentische nicht unerheblich erhöht.

Lade- und Reinigungsvorrichtungen der eingangs beschriebenen Art, die von der Anmelderin vertrieben werden, weisen eine Aufnahmeeinrichtung auf, die zwischen den beiden Seitentischen einen zusätzlichen Mitteltisch mit einer eigenen Vorderkante aufweist. Dieser Mitteltisch kann an seiner Vorderkante eine Aufnahmewalze und eine kämmende Achtkantwalze, aber auch nur ein starres Schubteil aufweisen. Hieran schließen sich dann Längsförderschnecken an, die auch bereits Teil der sich an die Aufnahmeeinrichtung anschließenden Förder- und Reinigungsstrecke sind.

Aus der EP 0 297 622 B1 ist eine Fördereinrichtung für ein selbstfahrendes Rübenlade- und Reinigungsgerät bekannt, bei der eine Vorrichtung zum Aufnehmen und Abfördern der Rüben aus mindestens einem Paar von Förderschnecken besteht, die die Rüben an jeweils einen Siebstern weitergeben. Die horizontal verlaufenden Drehachsen der Förderschnecken sind um die vertikal verlaufenden Drehachsen der Siebsterne verschwenkbar, so dass die Förderschnecken in der Horizontalen V-förmig gegeneinander anstellbar sind. Durch die Veränderung des Winkels zwischen den Förderschnecken ist die Arbeitsbreite des bekannten Rübelade- und Reinigungsgeräts an die Breite einer Rübenmiete anpassbar. Die Förderschnecken sind jeweils bis auf ihre Vorderseite von einem geschlossenen Schneckenmantel umgeben, der keine Trennung der Rüben von mitgeführter Erde ermöglicht. So ist kein besonderer Reinigungsnutzen damit verbunden, dass die Förderschnecken in einem kleineren Winkel als 180° zueinander ausgerichtet werden. Vielmehr geht es neben einer Anpassung der Arbeitsbreite des bekannten Rübeladen- und Reinigungsgeräts darum, mit den parallel ausgerichteten Förderschnecken den letzten Rest an Rüben einer Miete sicher vom Boden aufzunehmen.

### AUFGABE DER ERFINDUNG

Der Erfindung liegt die Aufgabe zugrunde, eine Lade- und Reinigungsvorrichtung mit den Merkmalen des Oberbegriffs des unabhängigen Patentanspruchs 1 aufzuzeigen, bei der ohne Erhöhung der Tiefe der Seitentische und eine zusätzliche Bestückung derselben mit nach außen fördernden Querförderwalzen eine verbesserte Reinigungsleistung und gleichmäßigere Verteilung der von den Wurzelfrüchten abgereinigten Erde erreicht wird.

### LÖSUNG

Erfindungsgemäß wird die Aufgabe der Erfindung durch eine Lade- und Reinigungsvorrichtung mit den Merkmalen des unabhängigen Patentanspruchs 1 gelöst. Bevorzugte Ausführungsformen der neuen Vorrichtung sind in den abhängigen Patentansprüchen 2 bis 9 definiert.

### BESCHREIBUNG DER ERFINDUNG

Bei der neuen Vorrichtung sind die Vorderkanten der Seitentische in mindestens einer Betriebsstellung der Aufnahmeeinrichtung in einem horizontalen Winkel von weniger als 170° zueinander angeordnet. Das bedeutet, dass die Seitentische V-förmig zueinander angestellt sind und dementsprechend vergleichbar mit einer geöffneten Schere an einer Rübenmiete angreifen. Dadurch, dass bei diesem Angriff die beiden Seitentische nicht mehr auf einer Linie an der Rübenmiete angreifen, die senkrecht zu der Mittellinie der Rübenmiete verläuft, fallen die Rüben aus den höheren Anteilen der Rübenmiete jetzt in zwei Teilströmen, die jeweils senkrecht zu den Vorderkanten der beiden Seitentische verlaufen, mit seitlicher Bewegungskomponente nach. Dies bedeutet, dass die Rüben bereits beim Nachfallen zur Mietensole auseinander gezogen werden, so dass sie sich gleichmäßiger über die von der Aufnahmeeinrichtung abgedeckte Breite der Rübenmiete verteilen. In dieser Verteilung werden die Rüben von der Aufnahmeeinrichtung aufgenommen und laufen so im Mittel längere Wege über deren Seitentische zu der Förder- und Reinigungsstrecke. Dies resultiert automatisch in eine bessere Reinigung der Rüben und eine gleichmäßigere Verteilung der von den Rüben abgereinigten Erde über die Arbeitsbreite der neuen Vorrichtung.

Es versteht sich, dass der geschilderte Effekt der V-förmig zueinander angestellten Seitentische der Aufnahmeeinrichtung umso größer ist, je kleiner der Winkel zwischen den Vorderkanten der beiden Seitentische ist. Ein deutlicher Effekt wird bereits erreicht, wenn der horizontale Winkel zwischen den beiden Vorderkanten 160° beträgt, was einem Anstellen beider Seitentische gegenüber ihrer senkrechten Ausrichtung zur Fahrtrichtung von 10° entspricht. Vorzugsweise beträgt die Anstellung jedes Seitentisches mindestens 15°, was einem horizontalen Winkel zwischen den Seitentischen von nicht mehr als 150° entspricht. Am meisten bevorzugt bewegt sich der Winkel zwischen den Seitentischen in einem Bereich von 110 bis 140°. Kleinere Winkel zwischen den Seitentischen reduzieren die effektive Arbeitsbreite der Vorrichtung verglichen mit der Breite jedes einzelnen Seitentisches bereits sehr stark.

Besonders günstig ist es bei der neuen Lade- und Reinigungsvorrichtung, wenn die Seitentische horizontal gegeneinander verschwenkbar sind. Sie können dann auf einen im Einzelfall minimalen horizontalen Winkel zueinander eingestellt werden, bei dem die Arbeitsbreite der Lade- und Reinigungsvorrichtung noch ausreichend ist, um die jeweilige Rübenmiete über ihre gesamte Breite aufzunehmen, und bei dem dann für die jeweilige Rübenmiete der optimale Reinigungsgrad und Verteilungsgrad der von den Rüben abgereinigten Erde über die Arbeitsbreite erreicht wird.

In einer besonders bevorzugten Ausführungsform der neuen Lade- und Reinigungsvorrichtung sind die Seitentische unabhängig voneinander über einen Schwenkwinkel von jeweils mindestens 10°, vorzugsweise mindestens 20° und am meisten bevorzugt mindestens 30° aus einer Betriebsstellung, in der ihre Vorderkanten in einem horizontalen Winkel von 180° zueinander angeordnet sind, gegeneinander verschwenkbar. Die unabhängige Verschwenkbarkeit der Seitentische ermöglicht es, die Seitentische auch bei einer zur Längsmittelachse der neuen Vorrichtung angewinkelten Fahrtrichtung symmetrisch zu der Fahrtrichtung anzuordnen. Wenn das Fahrwerk der neuen Vorrichtung mit einer Allradlenkung vorgesehen ist, die einen Hundegang erlaubt, kann so die Bodenbelastung durch die neue Vorrichtung minimiert werden, indem ihre einzelnen Räder beim Hundegang jeweils versetzt zueinander über den Boden rollen.

Grundsätzlich wie im Stand der Technik weist die neue Vorrichtung Seitentische mit parallel zueinander verlaufenden und umlaufend angetriebenen Walzen auf. Dabei werden die Vorderkanten der Seitentische vorzugsweise durch Aufnahmewalzen mit aufgesetzten Nocken ausgebildet, an die sich typischerweise eine kämmende Walze anschließt, die im Bereich ihres größten Durchmessers mehreckig, beispielsweise achteckig ist. Eine derartige Walze wird auch als kämmende Achtkantwalze bezeichnet. Hieran können sich weitere Walzen in Form von mit Wendeln versehenen Längsförderschnecken anschließen, die die Rüben in Querrichtung zu der Förder- und Reinigungsstrecke transportieren. Eine besonders gute Reinigungswirkung ergeben dabei benachbarte, aber gegenläufig angetriebene und mit gegenläufigen Wendeln versehene Querförderschnecken

Der Beginn der Förder- und Reinigungsstrecke kann ein Bett aus Längsförderschnecken sein, das in einem Mitteltisch der Aufnahmeeinrichtung ausgebildet ist, an den die Seitentische angrenzen. Der Mitteltisch selbst kann mit einem starren Schubteil zur Ausbildung seiner Vorderkante zwischen den Vorderkanten der Seitentische ausgebildet sein. Vorzugsweise weist der Mitteltisch an seiner Vorderkante jedoch ebenfalls eine umlaufend angetriebene Aufnahmewalze mit aufgesetzten Nocken auf, an die sich eine kämmende Achtkantwalze anschließt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von zwei Ausführungsbeispielen näher erläutert und beschrieben, dabei zeigt
- **Fig. 1**: die Aufnahmeeinrichtung der neuen Lade- und Reinigungsvorrichtung in einer Ausführungsform mit einem Mitteltisch mit starrem Schubteil, und
- **Fig. 2**: die Aufnahmeeinrichtung der neuen Lade- und Reinigungsvorrichtung in einer Ausführungsform mit einem Mitteltisch mit mechanischem Schubteil; beide Aufnahmeeinrichtungen sind jeweils in einer Ansicht von oben beim Angriff an einer durch gestrichelte Linien angedeuteten Rübenmiete wiedergegeben.

### FIGURENBESCHREIBUNG

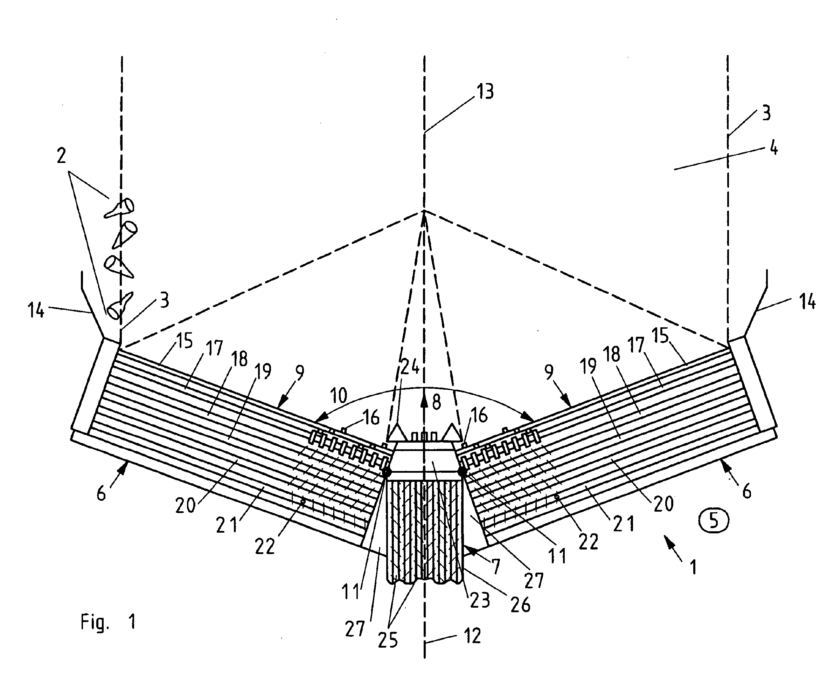

Die in **Fig. 1** wiedergegebene Aufnahmeeinrichtung 1 ist Teil einer hier nicht weiter dargestellten Vorrichtung zum Laden und Reinigen von Rüben 2. Die Aufnahmeeinrichtung 1 nimmt die Rüben 2 aus einer hier nur durch Ihre seitlichen Begrenzungen 3 wiedergegebenen Miete 4 vom Boden 5 auf. Die Aufnahmeeinrichtung 1 umfasst zwei Seitentische 6 und einen dazwischen angeordneten Mitteltisch 7. Die Seitentische 6 stehen seitlich horizontal von dem Mitteltisch 7 ab, wobei sie jeweils zu der Fahrtrichtung 8 der Vorrichtung um etwa 20° angewinkelt sind, so dass sie mit Ihren Vorderkanten 9 einen horizontalen Winkel 10 von etwa 160° einschließen. Dabei sind die Seitentische 6 um Schwenklager 11 mit vertikalen Schwenkachsen gegenüber dem Mitteltisch 7 einzeln stufenlos verschwenkbar, so dass sie untereinander auch andere und/oder gegenüber der Längsmittelachse 12 der Vorrichtung asymmetrisch angeordnete Winkel einschließen können. Dies erlaubt es beispielsweise, die Vorrichtung im Hundegang vorzuschieben und dennoch mit der Aufnahmeeinrichtung 1 im Wesentlichen symmetrisch zu deren Mittellinie 13 an der Rübenmiete 4 anzugreifen. Außen an den Seitentischen 6 sind Leitbleche 14 vorgesehen, die die am Weitesten außen liegenden Rüben 2 der Miete 4 zu Aufnahmewalzen 15 der Seitentische 6 lenken. Die Aufnahmewalzen 15 sind mit Nocken 16 versehen und umlaufend angetrieben, so dass sie die Rüben 2 aufnehmen und auf den jeweiligen Seitentisch 6 heben. An die Aufnahmewalzen 15, die auch die Vorderkanten 9 der Seitentische 6 ausbilden, schließen sich kämmende Achtkantwalzen 17 an, die die Rüben übernehmen und tangential nach hinten fördern. Hier gelangen die Rüben auf Querförderschnecken 18 bis 21, die mit Wendeln 22 versehen sind und die Rüben zu dem Mitteltisch 7 zusammenziehen. Die Querförderschnecken 18 bis 21 sind ebenso wie die Achtkantwalzen 17 um ihre Längsachsen umlaufend angetrieben, wobei teilweise benachbarte Querförderschnecken mit gegenläufigen Wendeln versehen und gegenläufig angetrieben sind, um eine besonders starke Reinigungswirkung auf die Rüben auszuüben. Der Mitteltisch 7 weist ein starres Schubteil 23 mit angesetzten starren Spitzen 24 auf, an die sich ein Bett aus Längsförderschnecken 25 anschließt, die bereits den Beginn einer sich an die Aufnahmeeinrichtung 1 anschließenden Förder- und Reinigungsstrecke 26 zum Weiterfördern und zur weiteren Reinigung der Rüben darstellen. Leitbleche 27 sind dazu vorgesehen, die Rüben über einen Winkel hinweg zu führen, der sich zwischen dem Mitteltisch 7 und den Seitentischen 6 aufgrund deren Verschwenkung um die Schwenklager 11 auftut. Die besondere Wirkungsweise der Aufnahmeeinrichtung 1 besteht darin, dass sie die Rüben 2 nicht in einer Linie vom Boden 5 aufnimmt, sondern mit ihren Vorderkanten 9 in zwei zueinander angewinkelten Bereichen an der Rübenmiete 4 angreift. Die senkrecht zu den Vorderkanten 9 aus den höheren Bereichen der Miete nachfallenden Rüben weisen anders als bei auf einer Geraden liegenden Vorderkanten 9 der beiden Seitentische 6 seitliche Bewegungskomponenten auf, die die Rüben 2 zu den Seitentischen 6 hin auseinander ziehen. Im Ergebnis vergrößern sich die Wege, die die einzelnen Rüben im Mittel auf den Seitentischen 6 zurücklegen, und damit die Reinigungswirkung, die von den Seitentischen 6 auf die Rüben ausgeübt wird. Zusätzlich wird auch die von den Rüben abgereinigte Erde gleichmäßiger über die Arbeitsbreite der Aufnahmeeinrichtung 1 verteilt. Weiterhin ist der Umlenkwinkel der Rüben, die von den Seitentischen 6 auf dem Mitteltisch 7 an die Förder- und Reinigungsstrecke 26 übergeben werden, auf weniger als 90° reduziert, woraus ein gleichmäßigerer Rübenfluss mit einer geringeren Tendenz zur Bildung von Staus und Verletzung von Rüben resultiert.

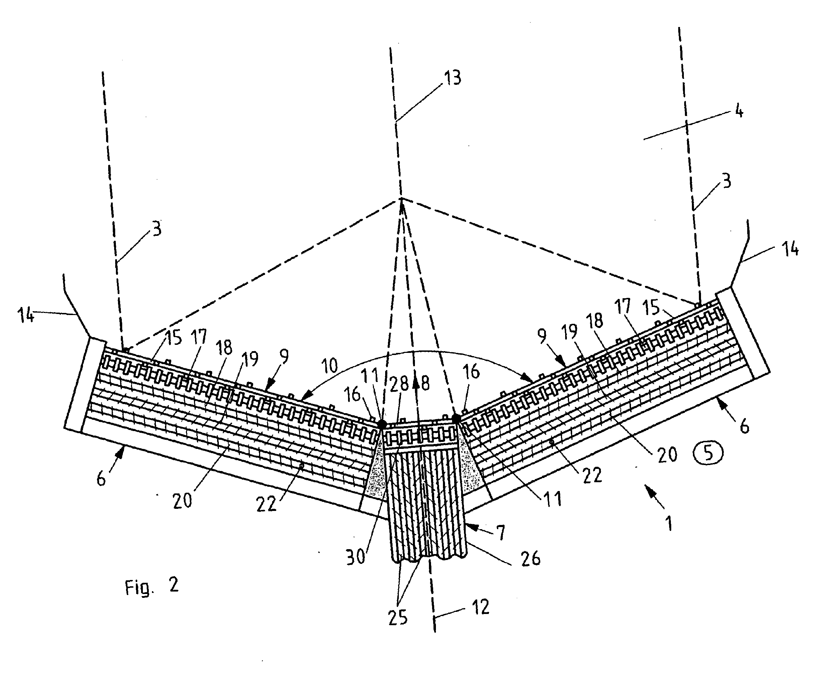

Die in Fig. 2 gezeigte Aufnahmeeinrichtung 1 einer anderen Ausführungsform der neuen Lade- und Reinigungsvorrichtung für Rüben weist anders als die Ausführungsform gemäß Fig. 1 einen Mitteltisch 7 mit mechanischem Schubteil 31 auf. Dieses umfasst eine vorne liegende Aufnahmewalze 28 mit Nocken 29 und eine dahinter angeordnete kämmende Achtkantwalze 30. Diese beiden Walzen 28 und 30 sind wie die entsprechenden Walzen 15 und 17 der Seitentische 6 drehangetrieben. Weiterhin liegen die Schwenklager 11 etwas weiter vorne als in Fig. 1, und zwar hier auf Höhe der Vorderkanten 9 der Seitentische 6. Die grundsätzliche Funktion der Aufnahmeeinrichtung 1 und ihre Vorteile sind aber dieselben wie bei der Aufnahmeeinrichtung 1 gemäß Fig. 1. Allerdings weist hier jeder Seitentisch 6 nicht vier, sondern nur drei Querförderschnecken 18 bis 20 auf und ist damit besonders kurz und letztlich auch leicht gebaut. Angesichts der Verteilung der Rüben über die Breite beider Seitentische und die resultierenden längeren Wege der Rüben über die Seitentische sowie deren problemlose Übergabe an die Förder- und Reinigungsstrecke 26 resultieren hieraus bei der neuen Lade- und Reinigungsvorrichtung keinerlei Nachteile.

### BEZUGSZEICHENLISTE

- 1: Aufnahmeeinrichtung
- 2: Rübe
- 3: Seitenlinie
- 4: Miete
- 5: Boden
- 6: Seitentisch
- 7: Mitteltisch
- 8: Fahrtrichtung
- 9: Vorderkante
- 10: Winkel
- 11: Schwenklager
- 12: Längsmittelachse
- 13: Mittellinie
- 14: Leitblech
- 15: Aufnahmewalze
- 16: Nocken
- 17: Achtkantwalze
- 18: Querförderschnecke
- 19: Querförderschnecke
- 20: Querförderschnecke
- 21: Querförderschnecke
- 22: Wendel
- 23: starres Schubteil
- 24: Spitze
- 25: Längsförderschnecke
- 26: Förder- und Reinigungsstrecke
- 27: Leitblech
- 28: Aufnahmewalzen
- 29: Nocken
- 30: Achtkantwalze
- 31: mechanisches Schubteil

## Patentansprüche

1. Selbstfahrende Lade- und Reinigungsvorrichtung für Wurzelfrüchte, insbesondere für Zuckerrüben, mit einer in Fahrtrichtung vorne liegenden Aufnahmeeinrichtung (1) zum Aufnehmen der Wurzelfrüchte vom Boden und zum Vorreinigen und Zusammenziehen der Wurzelfrüchte zu einer sich in Fahrtrichtung nach hinten an die Aufnahmeeinrichtung (1) anschließenden Förder- und Reinigungsstrecke, wobei die Aufnahmeeinrichtung (1) zwei im Betrieb horizontal seitlich abstehende Seitentische (6) aus parallel zueinander verlaufenden und umlaufend angetriebenen Walzen aufweist, **dadurch gekennzeichnet, dass** die Vorderkanten (9) der Seitentische (6) in mindestens einer Betriebsstellung in einem horizontalen Winkel (10) von weniger als 170° zueinander angeordnet sind.

2. Lade- und Reinigungsvorrichtung nach Anspruch 1, **dadurch gekennzeichnet, dass** die Vorderkanten (9) der Seitentische (6) in mindestens einer Betriebsstellung in einem horizontalen Winkel (10) von nicht mehr als 160°, vorzugsweise nicht mehr als 150° und am meisten bevorzugt von 110 bis 140° zueinander angeordnet sind.

3. Lade- und Reinigungsvorrichtung nach Anspruch 1 oder 2, **dadurch gekennzeichnet, dass** die Seitentische (6) horizontal gegeneinander verschwenkbar sind.

4. Lade- und Reinigungsvorrichtung nach Anspruch 3, **dadurch gekennzeichnet, dass** die Seitentische (6) unabhängig voneinander über einen Schwenkwinkel von jeweils mindestens 10°, vorzugsweise mindestens 20° und am meisten bevorzugt mindestens 30° aus einer Betriebsstellung, in der ihre Vorderkanten (9) in einem horizontalen Winkel von 180° zueinander angeordnet sind, gegeneinander verschwenkbar sind.

5. Lade- und Reinigungsvorrichtung nach Anspruch 4, **dadurch gekennzeichnet, dass** ein Fahrwerk mit einer Allradlenkung vorgesehen ist, die einen Hundegang erlaubt.

6. Lade- und Reinigungsvorrichtung nach einem der Ansprüche 1 bis 5, **dadurch gekennzeichnet, dass** die Vorderkanten (9) der Seitentische durch Aufnahmewalzen mit aufgesetzten Nocken ausgebildet sind.

7. Lade- und Reinigungsvorrichtung nach einem der Ansprüche 1 bis 6, **dadurch gekennzeichnet, dass** die Seitentische (6) benachbarte, aber gegenläufig angetriebene mit gegenläufigen Wendeln (22) versehene Querförderschnecken (18 bis 21) aufweisen.

8. Lade- und Reinigungsvorrichtung nach einem der Ansprüche 1 bis 7, **dadurch gekennzeichnet, dass** die Seitentische (6) jeweils an eine Mitteltisch (7) der Aufnahmeeinrichtung (1) angrenzen, der mit Wendeln versehene Längsförderschnecken (25) aufweist.

9. Lade- und Reinigungsvorrichtung nach Anspruch 8, **dadurch gekennzeichnet, dass** der Mitteltisch (7) an seiner Vorderkante eine umlaufend angetriebene Aufnahmewalze (28) mit aufgesetzten Nocken (29) aufweist.

## Claims

1. A self-propelled loading and cleaning device for root crops, particularly sugar beet, comprising an up-taking unit (1) located at the front in travel direction for taking up the root crops from the ground and for pre-cleaning and moving the root crops together towards a conveying and cleaning path following the up-taking unit (1) towards the back in the direction of travel, the up-taking unit (1) having two side tables (6) protruding laterally and horizontally in operation, which are made of rollers running in parallel to each other and which are driven for rotation, **characterised in that** the front edges (9) of the side tables (6), in at least one operation position, are arranged at a horizontal angle of less than 170° with regard to each other.

2. The loading and cleaning device of claim 1, **characterised in that** the front edges (9) of the side tables (6) are arranged at a horizontal angle (10) of not more than 160°, preferably of not more than 150°, and most preferably of 120 to 140° with regard to each other, in at least one operation position.

3. The loading and cleaning device of claim 1 or 2, **characterised in that** the side tables (6) are horizontally swivel-mounted with regard to each other.

4. The loading and cleaning device of claim 3, **characterised in that** the side tables (6) are independently swivelling over a swivel angle of at least 10°, preferably at least 20° and most preferably at least 30° each out of an operational position in which their front edges (9) are arranged at a horizontal angle of 180° with regard to each other.

5. The loading and cleaning device of claim 4, **characterised in that** a running gear is provided which has four wheel steering enabling a dog run.

6. The loading and cleaning device of any of the claims 1 to 5, **characterised in that** the front edges (9) of the side tables are made of up-taking rollers with attached cams.

7. The loading and cleaning device of any of the claims 1 to 6, **characterised in that** the side tables (6) comprise adjacent but oppositely driven transversally conveying screws (18 to 21) provided with spirals (22) of opposite pitches.

8. The loading and cleaning device of any of the claims 1 to 7, **characterised in that** the side tables (6) adjoin a middle table (7) of the up-taking unit (1) which has longitudinally conveying screws (25) provided with spirals.

9. The loading and cleaning device of claim 8, **characterised in that** the middle table (7) has a rotary-driven up-taking roller (28) with attached cams (29) at its front edge.

## Revendications

1. Dispositif automoteur de chargement et de nettoyage de tubercules, en particulier des betteraves sucrières, comportant un dispositif de ramassage (1), situé à l'avant dans le sens de déplacement, destiné à ramasser les tubercules sur le sol et destiné à pré-nettoyer et à aligner les tubercules sur une trajectoire de transport et nettoyage, adjacente au dispositif de ramassage (1) vers l'arrière dans le sens de déplacement, ledit dispositif de ramassage (1) comportant deux tables latérales (6), en saillie latérale horizontalement en cours de service, formées par des cylindres parallèles entre eux et entraînés en rotation, **caractérisé en ce que** les bords avant (9) des tables latérales (6), au moins dans une position de service, sont disposés l'un par rapport à l'autre en formant un angle horizontal (10) de moins de 170°.

2. Dispositif automoteur de chargement et de nettoyage selon la revendication 1, **caractérisé en ce que** les bords avant (9) des tables latérales (6), au moins dans une position de service, sont disposés l'un par rapport à l'autre en formant un angle horizontal (10) de 160° maximum, de préférence de 150° maximum et encore mieux de 110 à 140°.

3. Dispositif automoteur de chargement et de nettoyage selon la revendication 1 ou 2, **caractérisé en ce que** les tables latérales (6) sont aptes à pivoter l'une vers l'autre horizontalement.

4. Dispositif automoteur de chargement et de nettoyage selon la revendication 3, **caractérisé en ce que** les tables latérales (6) sont aptes à pivoter l'une vers l'autre, indépendamment l'une de l'autre, selon un angle de pivotement de respectivement au moins 10°, de préférence au moins 20° et encore mieux au moins 30° hors d'une position de service, dans laquelle leurs bords avant (9) sont disposés l'un par rapport à l'autre en formant un angle horizontal de 180°.

5. Dispositif automoteur de chargement et de nettoyage selon la revendication 4, **caractérisé en ce qu'**il est prévu un châssis de roulement avec une direction agissant sur toutes les roues, qui permet une marche en crabe.

6. Dispositif automoteur de chargement et de nettoyage selon l'une quelconque des revendications 1 à 5, **caractérisé en ce que** les bords avant (9) des tables latérales sont formés par des cylindres de ramassage, sur lesquels sont rapportées des cames.

7. Dispositif automoteur de chargement et de nettoyage selon l'une quelconque des revendications 1 à 6, **caractérisé en ce que** les tables latérales (6) comportent des vis de transport transversales (18 à 21) adjacentes, mais actionnées en sens opposé et munies d'hélices (22) à pas opposé.

8. Dispositif automoteur de chargement et de nettoyage selon l'une quelconque des revendications 1 à 7, **caractérisé en ce que** les tables latérales (6) sont chacune adjacentes à une table centrale (7) du dispositif de ramassage (1), laquelle comporte des vis de transport longitudinales (25) munies d'hélices.

9. Dispositif automoteur de chargement et de nettoyage selon la revendication 8, **caractérisé en ce que** la table centrale (7) comporte sur son bord avant un cylindre de ramassage (28), entraîné en rotation, sur lequel sont rapportées des cames (29).
